# EUROPÄISCHE PATENTSCHRIFT

(11) **EP 3 395 145 B1**
(45) Veröffentlichungstag und Bekanntmachung des Hinweises auf die Patenterteilung: **01.04.2020**
(21) Anmeldenummer: 18401034.6
(22) Anmeldetag: 11.04.2018
(51) Int. Cl.: A01C 15/00, A01C 17/00, G01S 13/88, G01S 7/28, G01S 13/87, H01Q 1/52

(54) **LANDWIRTSCHAFTLICHER SCHLEUDERSTREUER**
AGRICULTURAL CENTRIFUGAL SPREADER
ÉPANDEUR À DISQUE AGRICOLE

(30) Priorität: 25.04.2017 DE 102017108768
(43) Veröffentlichungstag der Anmeldung: 31.10.2018
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Große Brinkhaus, Andre, 48149 Münster (DE); Probst, Sergej, 59379 Selm (DE)

(56) Entgegenhaltungen:
- EP-A1- 2 902 443
- WO-A1-2017/041884
- DE-A1-102010 022 288

## Beschreibung

Die Erfindung betrifft einen landwirtschaftlichen Schleuderstreuer gemäß dem Oberbegriff des Patentanspruches 1.

Landwirtschaftliche Schleuderstreuer sind typischerweise mit zwei Streuscheiben ausgestattet, auf welche der Dünger aus Schieberöffnungen eines Vorratsbehälters aufgegeben und anschließend mittels auf den Streuscheiben angeordneten Schleuderschaufeln unter Zentrifugalwirkung ausgestreut wird. Zu diesem Zweck drehen sich die Streuscheiben während der Arbeit mit hoher Geschwindigkeit. Moderne Schleuderstreuer verfügen über Radarsensoren, um den Streufächer des ausgebrachten Guts mittels Sensoren zu charakterisieren, so dass die derzeitige Arbeitsbreite, die Geometrie des Streufächers und/oder die Wurfweite bestimmt werden können. Derartige Messungen werden insbesondere mit Radarwellen durchgeführt. Hierfür sind in der Nähe der Streuscheiben ein oder mehrere Radarsensoren angeordnet. Ist nur ein Sensor vorhanden, so ist dieser typischerweise beweglich ausgestaltet, um den gesamten Streubereich des Streufächers erfassen zu können. Sind mehrere Sensoren vorhanden, so sind diese üblicherweise in Umfangsrichtung des Streufächers derart verteilt, dass auch hierdurch zumindest annähernd der gesamte Streubereich erfasst werden kann. Typischerweise handelt es sich um fünf oder mehr Sensoren pro Scheibe, es können sogar auch 20 oder mehr Sensoren pro Scheibe vorhanden sein. Die Streuscheiben des Schleuderstreuers sind häufig aus Edelstahl oder vergleichbaren Materialien gefertigt, welche eine ausreichende Robustheit und Langlebigkeit in Bezug auf mechanische und chemische Beanspruchung aufweisen. Es hat sich herausgestellt, dass derartige Schleuderscheiben zu fehlerbehafteten Messsignalen der Radarsensoren führen können, wenn sich eine zweite Schleuderscheibe im Messbereich eines Radarsensors, der einer ersten Schleuderscheibe zugeordnet ist, befindet.

Ein derartiger Schleuderstreuer ist in WO 2017/041884 A1 offenbart. Die Radarsensoren dieses Schleuderstreuers sind in einem Gehäuse, welches durchlässig ist für die Messstrahlung der Sensoren, angeordnet.

Aufgabe der vorliegenden Erfindung ist es, eine Abschirmvorrichtung für einen landwirtschaftlichen Schleuderstreuer anzugeben, die derartige fehlerbehaftete Messsignale verhindert.

Diese Aufgabe wird durch den kennzeichnenden Teil des Anspruchs 1 gelöst. Demnach ist vorgesehen, dass die Abschirmvorrichtung zumindest in einer möglichen Sichtachse zwischen dem Radarsensor und einer zweiten Streuscheibe des Schleuderstreuers und/oder deren Wurfschaufeln angeordnet ist. Es ist also vorgesehen, dass die Abschirmvorrichtung eine oder mehrere direkte Sichtlinien zwischen dem Radarsensor, insbesondere dem Zentrum des Abstrahlbereiches des Gehäuses des Radarsensors, und der zweiten Streuscheibe und/oder der oder den Wurfschaufeln der zweiten Streuscheibe blockiert, so dass keine unerwünschten Rückstreuungen von Radarwellen an der zweiten Streuscheibe erfolgen können. Die zweite Streuscheibe ist hierbei jeweils diejenige Streuscheibe, der der jeweils betrachtete Radarsensor nicht zugeordnet ist.

In einer vorteilhaften Weiterbildung der Erfindung ist vorgesehen, dass die Abschirmvorrichtung zumindest dann in der Sichtachse zwischen dem Radarsensor und dem äußeren Ende der Wurfschaufeln der zweiten Streuscheibe angeordnet ist, wenn die in Fahrtrichtung gesehen hintere Wurfschaufel parallel zur Fahrtrichtung orientiert ist. Aufgrund des begrenzten Öffnungswinkels des Abstrahlbereiches der Radarwellen des Radarsensors befindet sich die zweite Schleuderscheibe vornehmlich dann im Messbereich eines Radarsensors einer ersten Schleuderscheibe, wenn die Wurfschaufel, also das am weitesten herausragende Bauteil der Schleuderscheibe parallel zur Fahrtrichtung nach hinten entgegen der Fahrtrichtung orientiert ist. Mit anderen Worten also der äußerste Teil der Wurfschaufel am weitesten hinten relativ zum Schleuderstreuer bzw. der jeweiligen Streuscheibe platziert ist. In dieser Position ist die Wahrscheinlichkeit am größten, dass das Ende der Wurfschaufel sich im Messbereich zumindest eines Radarsensors der benachbarten zweiten Streuscheibe befindet. Dies ist bei einer typischen konzentrischen Anordnung von mehreren Radarsensoren um das Zentrum einer ersten Streuscheibe normalerweise derjenige Radarsensor, welcher den geringsten Abstand zur zweiten Streuscheibe aufweist.

Alternativ oder zusätzlich kann vorgesehen sein, dass die Abschirmvorrichtung zumindest dann in der Sichtachse zwischen dem Radarsensor und dem äußeren Ende der Wurfschaufeln der zweiten Streuscheibe angeordnet ist, wenn der Abstand zwischen dem Radarsensor und den Wurfschaufeln jeweils minimal ist. Ist der Abstand zwischen dem Radarsensor und einer Wurfschaufel der benachbarten Streuscheibe besonders gering, so kann die Intensität der zurückgestreuten Radarwellen besonders groß sein, so dass es besonders vorteilhaft sein kann, dass in dieser Position die Sichtlinie zwischen dem äußeren Ende der Wurfschaufel und dem betrachteten Radarsensor blockiert ist.

In einer möglichen Ausgestaltung der Erfindung ist vorgesehen, dass die Abschirmvorrichtung aus Radarwellen absorbierendem Material gefertigt und vorzugsweise in der Symmetrieebene des Schleuderstreuers angeordnet ist. Es kann also vorgesehen sein, die Abschirmvorrichtung aus einem Material zu fertigen, welches die Radarwellen absorbiert. In diesem Fall ist es besonders vorteilhaft, die Abschirmvorrichtung in der Symmetrieebene des Schleuderstreuers oder parallel hierzu anzuordnen, wenn beide Streuscheiben des Schleuderstreuers über Radarsensoren zur Ermittlung der jeweiligen Verteilcharakteristik verfügen. Auf diese Weise kann bei zwei zur Symmetrieebene symmetrisch angeordneten Streuscheiben und Radarsensoranordnungen der beiden Streuscheiben eine Abschirmvorrichtung für beide Streuscheiben bzw. Radarsensoranordnungen verwendet werden.

In einer alternativen Ausgestaltung ist vorgesehen, dass die Abschirmvorrichtung aus Radarwellen reflektierendem Material gefertigt und nichtparallel zur Symmetrieebene des Schleuderstreuers angeordnet ist. Wenn die Abschirmvorrichtung besonders einfach und robust aufgebaut sein soll, kann es zweckmäßig sein, sie aus Radarwellen reflektierendem Material, wie beispielsweise Edelstahl, zu fertigen. In diesem Fall ist es erforderlich, die Abschirmvorrichtung nichtparallel zur Symmetrieebene des Schleuderstreuers anzuordnen. Andernfalls würde zwar die zweite Streuscheibe durch eine entsprechend angeordnete Abschirmvorrichtung abgeschirmt, allerdings würden die Radarwellen derart von der parallel zur Symmetrieebene angeordneten Abschirmvorrichtung hin und her reflektiert, dass Radarwellen an der ersten Streuscheibe reflektiert werden können, was unter Umständen zu Messfehlern führt. Für den Fall einer nichtparallelen Anordnung der Abschirmvorrichtung am Schleuderstreuer sind zwei Abschirmvorrichtungen vorgesehen, falls jeder der beiden Streuscheiben eine Anordnung von Radarsensoren zugeordnet ist.

In einer vorteilhaften Weiterbildung der Erfindung ist vorgesehen, dass die Abschirmvorrichtung alle mögliche Sichtachsen zwischen dem Radarsensor und der zweiten Streuscheibe und/oder deren Wurfschaufeln blockiert. Die Abschirmvorrichtung kann also derart ausgestaltet sein, dass jegliche Sichtachse zwischen dem Radarsensor der ersten Streuscheibe und der zweiten Streuscheibe und/oder deren Wurfschaufeln blockiert wird, so dass Reflexionen von Radarwellen des Radarsensors an der zweiten Streuscheibe oder deren Wurfschaufeln vollständig verhindert werden können.

Weitere vorteilhafte Ausgestaltungen ergeben sich aus der Figurenbeschreibung und den Zeichnungen, hierbei zeigen
- Fig. 1: ein erfindungsgemäßer Schleuderstreuer,
- Fig. 2: eine Abschirmvorrichtung, eine Sensoranordnung und erste und zweite Streuscheibe eines erfindungsgemäßen Schleuderstreuers und
- Fig. 3: eine Abschirmvorrichtung, eine Sensoranordnung und erste und zweite Streuscheibe eines erfindungsgemäßen Schleuderstreuers aus einer zweiten Perspektive.

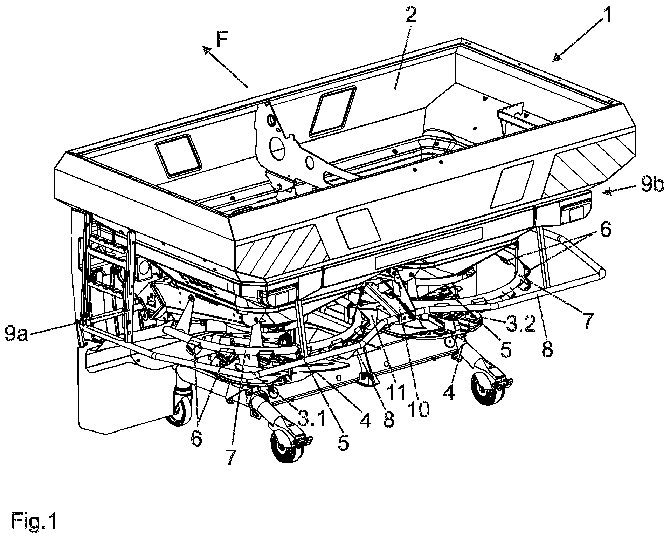

Ein erfindungsgemäßer Schleuderstreuer 1 ist in Fig. 1 gezeigt. Dieser weist unter anderem einen Behälter 2 zur Aufbewahrung von Streugut und im unteren Bereich eine erste und zweite Streuscheibe 3.1, 3.2 mit jeweils zwei Wurfschaufeln 4 auf, mit denen das im Behälter 1 befindliche Material auf der zu bearbeitenden landwirtschaftlichen Fläche verteilt werden kann. Die Zuführung von Streugut zu den Streuscheiben 3 kann hierfür mittels Dosierschiebern 5 gesteuert werden. Oberhalb der Streuscheibe und zumindest annähernd konzentrisch in Umfangsrichtung der jeweiligen Streuscheibe verteilt angeordnet sind Radarsensoren 6, in diesem Fall sieben pro Streuscheibe 3, als Radarsensoranordnung welche den Streufächer der jeweiligen Streuscheibe abtastet. Es können auch weniger oder mehr als sieben Radarsensoren 6 pro Streuscheibe und Radarsensoranordnung vorgesehen sein. Insbesondere kann auch vorgesehen sein, einen einzigen Sensor zu verwenden, welcher in Umfangsrichtung der Streuscheibe 3 schwenkbar angeordnet ist. Ebenso kann vorgesehen sein, dass nur einer der beiden Streuscheiben 3 ein oder mehrere Radarsensoren 6 zugeordnet sind und die gemessenen Signale unter Annahme einer symmetrischen Verteilung auf die zweite Streuscheibe übertragen werden. Die Radarsensoren 6 sind an einer Haltevorrichtung 7 befestigt. Die Haltevorrichtung 7 ist ebenfalls an dem Schleuderstreuer 1 befestigt, so dass die Radarsensoren 6 konzentrisch um die Streuscheiben verteilt sind. Die Radarsensoren befinden sich hierbei bezüglich der Fahrtrichtung F vorwiegend auf der Rückseite des Schleuderstreuers, so dass das nach hinten abgeworfene Streugut von den Radarsensoren 6 mit Radarwellen beaufschlagt werden kann. Um den Verteilprozess nicht zu behindern befinden sich die Radarsensoren 6 zudem in vertikaler Richtung etwas oberhalb der Streuscheiben 3, so dass die Sensoranordnung nicht von dem abgeworfenen Streugut getroffen wird. Ebenso gut können die Radarsensoren auch unterhalb der Streuscheiben 3 angeordnet sein.

Das abgeworfene Streugut wird von den Radarsensoren 6 mit Radarwellen beaufschlagt, so dass aus der Intensität des Messsignals auf die Menge des in den jeweiligen Messbereich abgeworfenen Streugutes geschlossen werden kann und/oder aus der Frequenz des Messsignals auf die Geschwindigkeit und damit die Wurfweite des abgeworfenen Streugutes geschlossen werden kann. Insbesondere aus einem Vergleich der Intensitäten der Radarsensoren 6 einer Streuscheibe 3.1, 3.2 kann auf die abgeworfene Streugutmenge und/oder die Verteilcharakteristik und/oder die Arbeitsbreite der jeweiligen Streuscheibe geschlossen werden. Die Messsignale werden entsprechend in einer nicht dargestellten Datenverarbeitungsvorrichtung, beispielsweise einem Jobrechner an dem Schleuderstreuer 1, hinsichtlich Ausbringmenge, Wurfweite, Arbeitsbreite und/oder weiterer Parameter ausgewertet und mit in dem Jobrechner hinterlegten Sollwerten verglichen, so dass bei einer Abweichung mittels einer Regelung durch Einstellung von beispielsweise Schleuderscheibendrehzahl, Dosierschieberstellung und Anpassung des Aufgabepunktes des Streugutes auf die Streuscheiben 3 eine Istwert-Anpassung an die Sollwerte erfolgt.

Oberhalb der Radarsensoren 6 und der Haltevorrichtung 7 ist eine umlaufende, bügelartige Schutzvorrichtung 8 gezeigt, welche auf der rückwärtigen Seite des Schleuderstreuers 1 sowohl die Radarsensoren 6, als auch die Streuscheiben 3 in horizontaler Richtung umschließt. Die Schutzvorrichtung 8 kann, wie in diesem Fall einstückig ausgebildet sein, kann aber auch aus zwei oder mehr Teilen bestehen. Die Schutzvorrichtung 8 ist in den Bereichen 9a und 9b am Rahmen des Schleuderstreuers befestigt und mittels einer Befestigungsvorrichtung 10 im hinteren Bereich des Behälters 2.

An der Befestigungsvorrichtung 10 ebenfalls angeordnet ist eine Abschirmvorrichtung 11, welche unerwünschte Reflexionen und Streuungen von Radarwellen des jeweils innersten der Radarsensoren 6 der Radarsensoranordnung jeder Schleuderscheibe an der anderen Schleuderscheibe verhindern soll, so dass es zu keinen Fehlmessungen auf Grund von zurückgestreuten Radarwellen an der benachbarten Streuscheibe kommen kann.

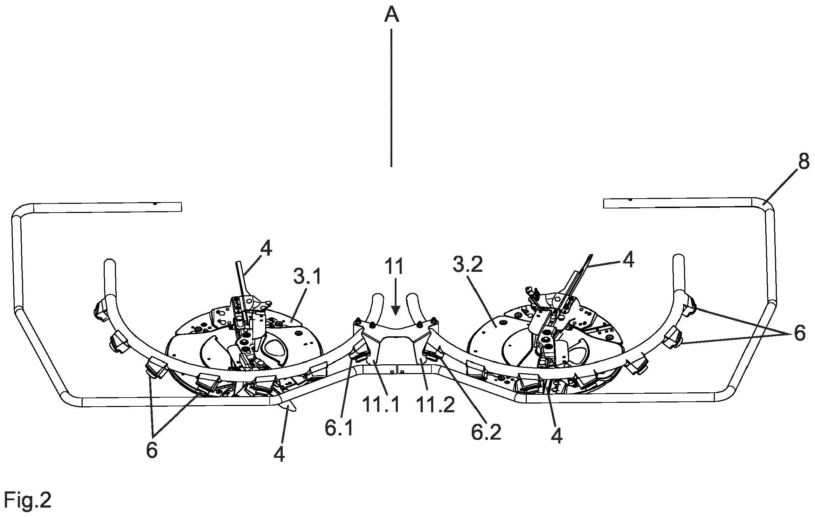

Die Bügelvorrichtung 8, die Streuscheiben 3.1 und 3.2 sowie die Radarsensoren 6 und die Abschirmvorrichtung sind in Fig. 2 in einer Ansicht von hinten gezeigt. Die beiden überwiegend vertikalen Blechteile 11.1 und 11.2 sind hierbei derart angeordnet, dass die jeweils am weitesten innen liegenden Radarsensoren 6.1 und 6.2 der Radarsensoranordnungen einer ersten Streuscheibe 3.1 und einer zweiten Streuscheibe 3.2 gegenüber Rückstreuungen an der zweiten respektive ersten Streuscheibe 3.2 bzw. 3.1 abgeschirmt werden. Die am weitesten innen liegenden Radarsensoren sollen also jeweils gegen Rückstreuungen von ausgesendeten Radarwellen an der Streuscheibe abgeschirmt werden, dessen Streufächer durch diesen Radarsensor nicht erfasst wird. Die Blechteile 11.1 und 11.2 der Abschirmvorrichtung 11 sind dabei jeweils so angeordnet, dass die Sichtachse zwischen dem Radarsensor 6.1, 6.2 und der benachbarten Streuscheibe 3.2, 3.1 zumindest teilweise blockiert wird. Die Blechteile 11.1, 11.2 sind bezüglich der Schleuderstreuersymmetrieebene A schräg angeordnet, also nicht parallel zur Symmetrieebene, so dass sie nicht als unerwünschter Spiegel wirken können. Wären die Blechteile parallel zur Symmetrieebene A angeordnet, so könnten zwar beispielsweise Rückstreuungen der zweiten Streuscheibe verhindert werden, allerdings könnten durch Reflexionen der ausgesendeten Radarwellen an dem Blechteil 11.1 unerwünschte Messfehler durch Rückstreuungen an der ersten Streuscheibe 3.1 und erneute Reflexion an dem Blechteil 11.1 entstehen. Es würde also der unerwünschte Effekt der Rückstreuung an der zweiten Streuscheibe durch Spiegelung mittels des Blechteils 11.1 in oder parallel zur Symmetrieebene auf die erste Streuscheibe 3.1 in unerwünschter Weise übertragen. Aus diesem Grund ist es zweckmäßig die Blechteile 11.1, 11.2 nichtparallel zur Symmetrieebene anzuordnen, sofern das Blechteil 11.1, 11.2 aus Radarwellen reflektierendem Material besteht. Bei Radarwellen absorbierendem Material kann die Abschirmvorrichtung auch parallel zu oder in der Symmetrieebene liegend angeordnet sein. Auf diese Weise ist unter Umständen eine einzige Abschirmvorrichtung für beide Sensoranordnungen bzw. Sensoren 6.1, 6.2 ausreichend. Je nach Ausrichtung und Signalstärke der Radarsensoren 6 und Anordnung bzw. Geometrie der Streuscheiben 3.1, 3.2 und/oder Wurfschaufeln 4 können auch weitere Sensoren 6 gegen unerwünschte Rückstreuungen durch weitere Abschirmvorrichtungen und oder eine andere geometrische Ausgestaltung der Abschirmvorrichtung 11 geschützt werden.

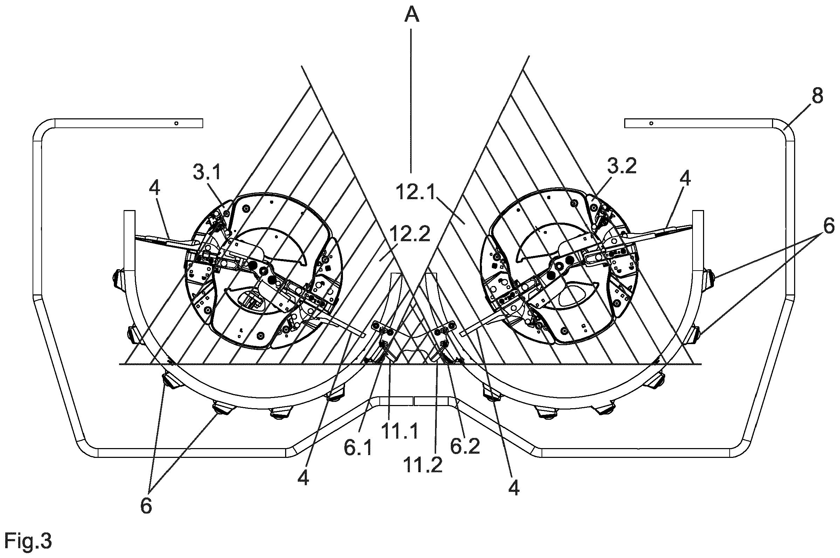

Eine senkrechte Ansicht der Streuscheiben 3.1, 3.2, Wurfschaufeln 4, Radarsensoren 6, 6.1, 6.2 und Schutzbügels 8 ist in Fig. 3 dargestellt. Die schraffierten Bereiche 12.1 und 12.2 bilden den jeweils durch die Blechteile 11.1 und 11.2 abgeschatteten Bereich, wobei die Wurfschaufeln 4 der sich im Betrieb drehenden Streuscheiben 3.1 und 3.2 sich zumindest dann im abgeschatteten Bereich 12.1 bzw. 12.2 befinden, wenn der Abstand zwischen der jeweiligen Wurfschaufel 4 und dem Radarsensor 6.1 bzw. 6.2 minimal ist. Wenn sich eine Wurfschaufel 4 in dem abgeschatteten Bereich 12.1, 12.2 befindet, ist also die Sichtachse zwischen der Wurfschaufel 4 der Streuscheibe 3.2, 3.1 und dem Radarsensor 6.1, 6.2 der benachbarten Streuscheibe 3.1, 3.2 blockiert, so dass keine Radarwellen zurückgestreut und fehlerbehaftete Messsignale erzeugt werden können. Je nach Anforderung können die Blechteile 11.1, 11.2 auch so dimensioniert, beispielsweise entsprechend vergrößert bzw. nach hinten verlängert werden, dass sich die schraffierten Bereiche ebenfalls vergrößern und dass die Wurfschaufeln die schraffierten Bereiche 12.1, 12.2 zu keiner Zeit verlassen und somit während der Drehbewegung der jeweiligen Streuscheibe zu jeder Zeit abgeschattet werden.

Ist ein beweglicher Radarsensor pro Streuscheibe vorgesehen, so kann das Blechteil 11.1, 11.2 oder sonstige Abschirmvorrichtung an die verschiedenen Positionen des beweglichen Radarsensors angepasst sein und sich entweder mitbewegen oder ortsfest ausgestaltet sein. Die Abschirmvorrichtung kann wie im Ausführungsbeispiel angegeben als Blechteil 11.1, 11.2 ausgeführt sein. Beliebige Materialien, Geometrien und Materialstärken sind jedoch denkbar.

## Patentansprüche

1. Landwirtschaftlicher Schleuderstreuer (1), wobei an dem Schleuderstreuer (1) zumindest ein Radarsensor (6, 6.1, 6.2) zur Ermittlung der Verteilcharakteristik des Schleuderstreuers (1) angeordnet ist, wobei der Radarsensor (6, 6.1, 6.2) einer ersten Streuscheibe (3.1, 3.2) des Schleuderstreuers (1) zugeordnet ist, **dadurch gekennzeichnet, dass**
eine Abschirmvorrichtung zumindest in einer möglichen Sichtachse zwischen dem Radarsensor (6.1, 6.2) und einer zweiten Streuscheibe (3.2, 3.1) des Schleuderstreuers (1) und/oder deren Wurfschaufeln (4) angeordnet ist und
dieAbschirmvorrichtung eine oder mehrere direkte Sichtlinien zwischen dem Radarsensor (6.1, 6.2) und der zweiten Streuscheibe (3.2, 3.1) und/oder der oder den Wurfschaufeln (4) der zweiten Streuscheibe (3.2, 3.1) blockiert, so dass keine unerwünschten Rückstreuungen von Radarwellen an der zweiten Streuscheibe (3.2, 3.1) erfolgen können.

2. Landwirtschaftlicher Schleuderstreuer (1) nach Anspruch 1, **dadurch gekennzeichnet, dass** die Abschirmvorrichtung (11.1, 11.2) zumindest dann in der Sichtachse zwischen dem Radarsensor (6.1, 6.2) und dem äußeren Ende der Wurfschaufeln (4) der zweiten Streuscheibe (3.2, 3.1) angeordnet ist, wenn die in Fahrtrichtung gesehen hintere Wurfschaufel parallel zur Fahrtrichtung (F) orientiert ist.

3. Landwirtschaftlicher Schleuderstreuer (1) nach Anspruch 1 oder 2, **dadurch gekennzeichnet, dass** die Abschirmvorrichtung (11.1, 11.2) zumindest dann in der Sichtachse zwischen dem Radarsensor (6.1, 6.2) und dem äußeren Ende der Wurfschaufeln (4) der zweiten Streuscheibe (3.2, 3.1) angeordnet ist, wenn der Abstand zwischen dem Radarsensor (6.1, 6.2) und den Wurfschaufeln (4) jeweils minimal ist.

4. Landwirtschaftlicher Schleuderstreuer (1) nach zumindest einem der Ansprüche 1 bis 3, **dadurch gekennzeichnet, dass** die Abschirmvorrichtung (11.1, 11.2) aus Radarwellen absorbierendem Material gefertigt und vorzugsweise in der Symmetrieebene (A) des Schleuderstreuers (1) angeordnet ist.

5. Landwirtschaftlicher Schleuderstreuer (1) nach zumindest einem der Ansprüche 1 bis 3, **dadurch gekennzeichnet, dass** die Abschirmvorrichtung (11.1, 11.2) aus Radarwellen reflektierendem Material gefertigt und nichtparallel zur Symmetrieebene (A) des Schleuderstreuers (1) angeordnet ist.

6. Landwirtschaftlichen Schleuderstreuer (1) nach zumindest einem der Ansprüche 1 bis 5, **dadurch gekennzeichnet, dass** die Abschirmvorrichtung (11.1, 11.2) alle mögliche Sichtachsen zwischen dem Radarsensor (6.1, 6.2) und der zweiten Streuscheibe (3.2, 3.1) und/oder deren Wurfschaufeln (4) blockiert.

## Claims

1. Agricultural centrifugal spreader (1), wherein at least one radar sensor (6, 6.1, 6.2) for determining the distribution characteristic of the centrifugal spreader (1) is arranged on the centrifugal spreader (1), wherein the radar sensor (6, 6.1, 6.2) is assigned to a first spreading disc (3.1, 3.2) of the centrifugal spreader (1),
**characterized in that**
a shielding apparatus is arranged at least in a possible visual axis between the radar sensor (6.1, 6.2) and a second spreading disc (3.2, 3.1) of the centrifugal spreader (1) and/or the thrower blades (4) thereof, and the shielding apparatus blocks one or more direct lines of sight between the radar sensor (6.1, 6.2) and the second spreading disc (3.2, 3.1) and/or blocks the thrower blade(s) (4) of the second spreading disc (3.2, 3.1) such that no undesired backscatter of radar waves can take place at the second spreading disc (3.2, 3.1).

2. Agricultural centrifugal spreader (1) according to Claim 1, **characterized in that** the shielding apparatus (11.1, 11.2) is arranged in the visual axis between the radar sensor (6.1, 6.2) and the outer end of the thrower blades (4) of the second spreading disc (3.2, 3.1) at least when the rear thrower blade, as seen in the direction of travel, is oriented parallel to the direction of travel (F) .

3. Agricultural centrifugal spreader (1) according to Claim 1 or 2, **characterized in that** the shielding apparatus (11.1, 11.2) is arranged in the visual axis between the radar sensor (6.1, 6.2) and the outer end of the thrower blades (4) of the second spreading disc (3.2, 3.1) at least when the distance between the radar sensor (6.1, 6.2) and the thrower blades (4) is at a minimum in each case.

4. Agricultural centrifugal spreader (1) according to at least one of Claims 1 to 3, **characterized in that** the shielding apparatus (11.1, 11.2) is manufactured from material that absorbs radar waves, and is arranged preferably in the plane of symmetry (A) of the centrifugal spreader (1).

5. Agricultural centrifugal spreader (1) according to at least one of Claims 1 to 3, **characterized in that** the shielding apparatus (11.1, 11.2) is manufactured from material that reflects radar waves, and is arranged so as to be non-parallel to the plane of symmetry (A) of the centrifugal spreader (1).

6. Agricultural centrifugal spreader (1) according to at least one of Claims 1 to 5, **characterized in that** the shielding apparatus (11.1, 11.2) blocks all possible visual axes between the radar sensor (6.1, 6.2) and the second spreading disc (3.2, 3.1) and/or the thrower blades (4) thereof.

## Revendications

1. Épandeur à disques agricole (1), dans lequel au moins un capteur radar (6, 6.1, 6.2) est disposé au niveau de l'épandeur à disques (1) pour déterminer la caractéristique d'épandage de l'épandeur à disques (1), le capteur radar (6, 6.1, 6.2) étant associé à un premier disque d'épandage (3.1, 3.2) de l'épandeur à disques (1) ;
**caractérisé en ce que** :
un dispositif de protection est disposé au moins dans un axe visuel possible entre le capteur radar (6.1, 6.2) et un deuxième disque d'épandage (3.2, 3.1) de l'épandeur à disques (1) et/ou de leurs aubes éjectrices (4) et que le dispositif de protection bloque une ou plusieurs lignes visuelles directes entre le capteur radar (6.1, 6.2) et le deuxième disque d'épandage (3.2, 3.1) et/ou la ou les aubes éjectrices (4) du deuxième disque d'épandage (3.2, 3.1), de sorte qu'aucune rétrodiffusion non souhaitée des ondes radar ne puisse atteindre le deuxième disque d'épandage (3.2, 3.1) .

2. Épandeur à disques agricole (1) selon la revendication 1, **caractérisé en ce que** le dispositif de protection (11.1, 11.2) est au moins disposé dans l'axe visuel entre le capteur radar (6.1, 6.2) et l'extrémité extérieure des aubes éjectrices (4) du deuxième disque d'épandage (3.2, 3.1) lorsque l'aube éjectrice arrière, vue dans la direction de conduite, est orientée parallèlement à la direction de conduite (F).

3. Épandeur à disques agricole (1) selon la revendication 1 ou 2, **caractérisé en ce que** le dispositif de protection (11.1, 11.2) est disposé au moins dans l'axe visuel entre le capteur radar (6.1, 6.2) et l'extrémité extérieure des aubes éjectrices (4) du deuxième disque d'épandage (3.2, 3.1) lorsque la distance entre le capteur radar (6.1, 6.2) et les aubes éjectrices (4) est respectivement minimale.

4. Épandeur à disques agricole (1) selon au moins l'une quelconque des revendications 1 à 3, **caractérisé en ce que** le dispositif de protection (11.1, 11.2) est fabriqué à partir d'une matière absorbant les ondes radar et est de préférence disposé dans le plan de symétrie (A) de l'épandeur à disques (1).

5. Épandeur à disques agricole (1) selon au moins l'une quelconque des revendications 1 à 3, **caractérisé en ce que** le dispositif de protection (11.1, 11.2) est fabriqué à partir d'une matière réfléchissant les ondes radar et est disposé non parallèlement au plan de symétrie (A) de l'épandeur à disques (1).

6. Épandeur à disques agricole (1) selon au moins l'une quelconque des revendications 1 à 5, **caractérisé en ce que** le dispositif de protection (11.1, 11.2) bloque l'ensemble des axes visuels possibles entre le capteur radar (6.1, 6.2) et le deuxième disque d'épandage (3.2, 3.1) et/ou leurs aubes éjectrices (4).
